Europäisches Patentamt

European Patent Office

Office européen des brevets

(19)

(11)  EP 0 844 500 A2

(12)  EUROPÄISCHE PATENTANMELDUNG

(43) Veröffentlichungstag:
     27.05.1998  Patentblatt 1998/22

(51) Int. Cl.⁶: G01V 3/15

(21) Anmeldenummer: 97116618.6

(22) Anmeldetag: 24.09.1997

(84) Benannte Vertragsstaaten:
     AT BE CH DE DK ES FI FR GB GR IE IT LI LU MC
     NL PT SE

(30) Priorität: 26.11.1996 DE 19648833

(71) Anmelder:
     Institut Dr. Friedrich Förster
     Prüfgerätebau GmbH & Co. KG
     72766 Reutlingen (DE)

(72) Erfinder:
     Förster, Friedrich Martin
     72793 Pfullingen (DE)

(74) Vertreter:
     Patentanwälte
     Ruff, Beier, Schöndorf und Mütschele
     Willy-Brandt-Strasse 28
     70173 Stuttgart (DE)

(54)  **Verfahren und Vorrichtung zur Lokalisierung und Identifizierung von im Boden versteckten Suchobjekten, insbesondere Plastikminen**

(57)    Es wird ein Verfahren zur Lokalisierung und Identifizierung von unter einer Bodenoberfläche im Boden versteckten Suchobjekten beschrieben. Bevorzugte Suchobjekte sind Plastikminen, die i.a. einen Kunststoff-Körper und mindestens ein metallisches Teil, beispielsweise einen Zündstift, enthalten. Es wird zunächst die Position des metallischen Teils festgestellt, vorzugsweise mit einer Wirbelstromsonde. Dann wird ein das Teil umgebender Suchbereich mittels einer Bodensonde untersucht, die ein Bodensignal erzeugt, das das Vorhandensein von Bodenmaterial anzeigt. Das Bodensignal wird ortsauflösend ausgewertet. Vorzugsweise sind die Bodensonde und die Metallsonde identisch, was beispielsweise durch einen Betrieb der Wirbelstromsonde mit mindestens drei unterschiedlichen Frequenzen und eine geeignete Signalauswertung ermöglicht wird. Vor der Untersuchung des Suchbereiches kann die elektrische Leitfähigkeit und/oder Magnetisierbarkeit des Bodens durch Tränken mit einer Flüssigkeit erhöht werden, die Salzwasser und/oder magnetisierbare Partikel enthalten kann. Es wird auch ein tragbares Minensuchgerät beschrieben, bei dem am unteren Ende eine Tragestange ein Sondenträger-Gehäuse angeordnet ist, innerhalb dem eine Wirbelstrom-Suchspulenanordnung hin- und herbeweglich geführt ist.

Fig. 3

EP 0 844 500 A2

**Beschreibung**

Die Erfindung betrifft ein Verfahren und eine Vorrichtung zur Lokalisierung und Identifizierung von nahe einer Bodenoberfläche oder unter einer Bodenoberfläche im Boden versteckten Suchobjekten, die mindestens ein Teil aus einem elektrisch leitfähigen Material, insbesondere aus Metall, aufweisen. Ein Suchobjekt kann auch mindestens einen Körper aus im wesentlichen elektrisch nicht leitfähigem, nicht magnetischen Material aufweisen, an oder in dem das leitende Teil vorhanden ist. Das Material des Körpers ist typischerweise Kunststoff; bevorzugte Suchobjekte sind Minen, insbesondere Plastikminen.

Der oberflächennahe Bereich des Erdbodens ist in vielen Regionen der Welt insbesondere in Folge von Industrialisierung und militärischen Aktivitäten mit Fremdkörpern belastet. So sind beispielsweise weltweit große Landstriche mit Minen, Blindgängern und anderem noch gefährlichen Kriegsmaterial verseucht. Insbesondere Plastikminen, die aufgrund ihres niedrigen Preises von vielen Kriegsparteien in bewohnten und unbewohnten Gebieten vergraben oder verscharrt wurden, bedeuten eine ständige Gefahr für Leib und Leben von Menschen und Tieren.

Der Boden ist häufig auch mit Splittern, Projektilen, Patronenhülsen und anderen vor allem metallischen Kleinteilen wie Nägeln, Flaschen- und Dosenverschlüssen oder dergleichen durchsetzt und/oder bedeckt, die vergleichsweise weniger gefährlich sind.

Plastikminen bzw. Kunststoffminen, überwiegend als Anti-Personen-Minen konzipiert, sind besonders tückisch, da sie nur schwer wiederauffindbar sind. Üblicherweise sind sie nahe der Bodenoberfläche, beispielsweise im Bodenbewuchs, etwa im Gras versteckt, meist aber in einer Tiefe von 10 bis 15 cm vergraben. Plastikminen bestehen in der Regel im wesentlichen aus Kunststoff. Sie können völlig metallfrei sein. Bei vielen Plastikminen sind jedoch kleine Teile wie Zündstifte und dergleichen aus Metall. Speziell auf Kunststoff ansprechende Suchverfahren sind derzeit praktisch nicht verfügbar. Plastikminen werden daher oft mit Hilfe von Metallsonden anhand der in ihnen vorhandenen Metallteile detektiert.

Metallfreie Minen können mittels Metallsonden nicht aufgefunden werden. Die Effektivität der Suche nach Plastikminen mit Hilfe von Metallsonden wird dadurch stark beeinträchtigt, daß insbesondere empfindliche Metallsonden auf jegliche Metallteile ansprechen, ohne das dem Suchsignal direkt zu entnehmen ist, um welche Art von Metall es sich handelt, wie groß ein Metallstück ist und ob es ein harmloser metallischer Splitter, Nagel, Kronenkorken oder dergleichen oder ein metallisches Teil einer Plastikmine ist. Nur im letzteren Fall wären Räumungs- und/oder Entschärfungsmaßnahmen notwendig. Zur Steigerung der Effizienz bei der Minensuche und Minenbeseitigung ist es daher notwendig, die Rate der Falschalarme (false alarm rate) zu reduzieren.

Es ist Aufgabe der Erfindung, ein Verfahren und eine Vorrichtung zu schaffen, die es ermöglichen, nahe dem Boden oder im Boden versteckte harmlose Metallteile von insbesondere Plastikminen zu unterscheiden. Vorzugsweise soll auch eine Identifikation von Plastikminen nach ihrem Typ ermöglicht werden.

Zur Lösung dieser Aufgabe schlägt die Erfindung ein Verfahren mit dem Merkmal von Anspruch 1 und eine Vorrichtung mit den Merkmalen von Anspruch 19 vor.

Nach dem erfindungsgemäßen Verfahren erfolgt zunächst eine Feststellung der Position des aus einem elektrisch leitfähigen, insbesondere metallischen Material bestehenden Teils. Nachfolgend erfolgt eine Untersuchung eines die Position des Teiles umgebenden Suchbereiches mit mindestens einer für das Material des Bodens empfindlichen, ein Bodensignal erzeugenden Bodensonde. Diese ist derart ausgebildet, daß der Körper ein vom Bodensignal unterscheidbares Signal, vorzugsweise praktisch kein Signal, bewirkt. Der Suchbereich, dessen laterale Ausdehnung vorzugsweise weniger als 1 Meter beträgt, schließt das Teil ein. Gleichzeitig mit oder zeitversetzt zu der Untersuchung erfolgt eine ortsauflösende Auswertung des Bodensignals.

Mit der Erfindung wird nicht versucht, eine für das Material oder andere spezifische Eigenschaften des Körpers empfindliche Sonde zu schaffen oder zu verwenden. Vielmehr liegt die Erkenntnis zugrunde, daß dort, wo der Körper im Boden liegt, kein Bodenmaterial sein kann. Ein das metallische Teil umgebender Volumenbereich, in dem sich kein Bodenmaterial und kein elektrisch leitfähiges Material befindet, wird mit hoher Wahrscheinlichkeit mit elektrisch nicht leitfähigem Material, insbesondere Kunststoff, ausgefüllt sein. Ein bodenmaterialfreier Hohlraum, also das Fehlen von Bodenmaterial in einer definierten räumlichen Beziehung zum Ort eines metallischen Teils wird somit als Hinweis für das Vorhandensein einer Plastikmine genutzt. Die Umgebung des metallischen Teils kann in im wesentlichen horizontaler und/oder in vertikaler Richtung untersucht werden, wobei eine ausschließlich horizontale Untersuchung ausreichen kann.

Eine zuerst erfolgende Feststellung der Position des metallischen Teils ermöglicht es, die laterale Ausdehnung des mit der Bodensonde zu untersuchenden Suchbereiches auf den Bereich unmittelbar um das Teil herum zu beschränken. Dies kann die Flächenleistung bei der Minensuche und damit deren Effektivität deutlich erhöhen, da gänzlich metallfreie Bereiche des Suchbereiches keine Plastikminen mit Metallteilen aufweisen können und daher ggf. nicht näher untersucht zu werden brauchen. Wird jedoch vermutet, daß in einem Suchbereich entweder zusätzlich zu anderen Minen oder auch ausschließlich gänzlich metallfreie Minen versteckt sind, dann kann der Schritt der Feststellung der Position des metallischen Teiles auch entfallen. Der Suchbereich kann dann von Beginn an nur mit der Bodensonde untersucht werden, ohne daß eine Suche nach Metallteilen vorhergeht.

Für die Feststellung der Position des Teils können beliebige Verfahren mit ausreichender Empfindlichkeit für insbesondere metallische Materialien wie Stahl und anderen Eisenverbindungen verwendet werden. Beispielsweise ist der Einsatz von Magnetfeldsonden möglich, die den Einfluß ferromagnetischer Teile auf das Erdmagnetfeld zur Detektion der Teile ausnutzen. Vorzugsweise erfolgt die Feststellung induktiv durch eine Metallsonde, die mindestens eine induktive Suchspulenanordnung aufweist. Ein bevorzugtes Beispiel einer Suchspulenanordnung, die eine punktgenaue Feststellung der Position ermöglicht, ist in der DE 44 23 661 beschrieben.

Für die Untersuchung des Suchbereichs können z.B. Verfahren eingesetzt werden, bei denen eine zwei- oder dreidimensionale Abbildung des gesamten Suchbereiche zu einem gegebenen Zeitpunkt erzeugt wird. Dabei wird zeitgleich von vielen, vorzugsweise allen Orten des Suchbereiches Information aufgenommen. Es kann beispielsweise ein abbildender, z.B. in einer Infrarotkamera eingebauter Infrarotsensor verwendet werden. Hierbei werden Temperaturunterschiede zwischen dem Boden und dem mit dem Boden in der Regel nicht im thermischen Gleichgewicht stehenden Körper nachgewiesen und ggf. sichtbar gemacht.

Vorzugsweise erfolgt die Untersuchung durch Abrasterung bzw. Abscannen des Suchbereiches, also durch zeitversetzte Informationsgewinnung von verschiedenen Orten des Suchbereiches. Die Abrasterung kann manuell erfolgen, indem z.B. eine Sonde über den Suchbereich manuell hin und her bewegt wird. Vorzugsweise erfolgt das Abrastern automatisch, was für eine bessere Auswertbarkeit der Signale vorteilhaft ist. Das Abscannen des Suchbereiches kann elektromagnetisch erfolgen, z.B. infrarot-optisch oder durch ein Bodenradar (surface penetrating radar) Auch akustische Verfahren, insbesondere unter Verwendung von Ultraschall, sind möglich. Es ist auch möglich, mehrere auf unterschiedlichen Prinzipien beruhende Verfahren, deren Informationen sich vorzugsweise ergänzen, zu kombinieren.

Vorzugsweise erfolgt die Untersuchung, insbesondere die Abrasterung induktiv mittels einer Bodensonde, die mindestens eine induktive Suchspulenanordnung aufweist. Diese kann wie in der DE 44 23 661 A1 beschrieben aufgebaut sein. Bei diesem Verfahren wird somit eine Wirbelstromsonde als Bodensonde verwendet. Dabei wird ausgenutzt, daß in vielen Gebieten der Erde der oberflächennahe Bereich des Erdbodens eine gewisse elektrische Leitfähigkeit und/oder Magnetisierbarkeit besitzt. Diese Eigenschaften beruhen vor allem auf dem Vorhandensein von Wasser, insbesondere Salzwasser, und/oder dem Vorhandensein von Eisenverbindungen im Boden.

Bei der konventionellen Minensuche bewirken diese Bodeneigenschaften in der Regel störende Hintergrundsignale, die ggf. mit speziellen Betriebs- und Auswerteverfahren unterdrückt werden müssen. In den Fällen der Bodensignalunterdrückung wird jedoch die Signalempfindlichkeit verringert. Dadurch läuft man Gefahr, daß Minen "übersehen" bzw. nicht gefunden werden. Beispiele von Verfahren zur Unterdrückung von Umgebungssignalen sind in der internationalen Patentanmeldung WO 87/04801 und der schwedischen Offenlegungsschrift 82 02 094-2 beschrieben. Das zugrundeliegende Prinzip kann wie folgt beschrieben werden.

Eine in die Nähe eines zu detektierenden Suchobjektes bewegbare induktive Suchspulenanordnung wird mit zwei verschiedenen Erregerfrequenzen f1 und f2 betrieben. Verschiedene Materialien wirken sich in Abhängigkeit ihrer Materialeigenschaften (z.B. elektrische Leitfähigkeit, Permeabilität) in charakteristischer Weise auf die Impedanz der Empfängerspule der Suchspulenanordnung aus. Die Impedanz der Empfängerspule ändert sich für jedes Material in charakteristischer Weise mit der Frequenz. Dies führt zu einem entsprechend veränderten, einer Wechselspannung entsprechenden Spulensignal der Empfängerspule. Das Spulensignal kann als Vektor oder Zeiger in einer komplexen Spannungsebene dargestellt werden, die auf der X-Achse, bei Winkel 0° den Realteil des Spulensignals für eine entsprechende Frequenz und auf der Y-Achse, bei Winkel 90°, den Imaginärteil des Spulensignals enthält. In der Praxis können diese Signale, die einer Realspannung bzw. Imaginärspannung entsprechen, bei analog arbeitenden Verfahren beispielsweise durch phasengesteuerte Gleichrichtung des Spulensignals bezüglich des durch eine Sendespule der Suchspulenanordnung fließenden Primärstroms gebildet werden.

Die genannten Störgrößen können Störsignale erzeugen, die mehrere 100 mal größer als ein durch das Suchobjekt erzeugtes Nutzsignal sein können. Spannungen, die durch magnetisierbaren Boden hervorgerufen werden, liegen im wesentlichen in Richtung der imaginären Achse; elektrisch leitfähige Umgebungen erzeugen Störsignale im wesentlichen in Richtung der realen Achse. Zur Unterdrückung der Störgrößen kann die Phase für die gesteuerte Gleichrichtung senkrecht zur Störgröße eingestellt werden, wodurch das Spulensignal auf die senkrecht zur Störgröße stehende Achse projiziert wird.

Die Störsignale weisen eine andere Frequenzabhängigkeit auf als die Metallsignale. Metalle führen bei verschiedenen Frequenzen zu unterschiedlichen Beiträgen zur Empfängerspulenspannung. Wird beispielsweise nur die Differenz der imaginären Spannungen bei zwei verschiedenen Erregerfrequenzen ausgewertet, so kann durch diese Differenzbildung der Einfluß von magnetisierbarem Boden praktisch auf Null reduziert werden. Das Verhältnis zwischen Nutz- und Störsignal steigt stark an, da durch die Differenzbildung die Hauptstörer gleichzeitig unterdrückt werden, denn das Imaginär-Differenzsignal DIm wird in Richtung der imaginären Achse ausgewertet und die in Richtung der Realachse liegenden Leitfähigkeitsanteile werden unterdrückt. In ähnlicher Weise kann auch die Differenz der Realteile DR bei zwei Frequenzen zur Auswertung bei Unterdrückung der Bodensignale genutzt werden. Bei diesen im Bereich der Minensuche bekannten Zweifrequenzverfahren werden in der beschriebenen Weise Bodensignale unterdrückt, so daß eine mit zwei Frequenzen betriebene Suchspulenanordnung besonders empfindlich auf Metallteile ansprechen kann, da an sich viel stärkere Bodensignale unterdrückt werden.

Die Verwendung einer induktiven Suchspulenanordnung als Bodensonde geht einen hiervon abweichenden, neuen und ungewöhnlichen Weg, indem das bisher in der Minensuche als Störsignal unterdrückte Bodensignal zur Informationsgewinnung über den Boden im Suchbereich, und damit über möglicherweise vorhandene gefährliche Suchobjekte wie Plastikminen ausgenutzt wird.

Zur Erzeugung eines Bodensignals mittels einer Wirbelstromsonde kann wie folgt verfahren werden. In einer an die Empfängerspule angeschlossenen Signalauswerteeinrichtung werden mindestens ein Imaginär-Differenzsignal DIm und mindestens ein Real-Differenzsignal DR gebildet. Statt der bisher üblichen getrennten Auswertung des einen oder des anderen Signals, wird in der Signalauswerteeinrichtung ein Kombinationssignal aus mindestens zwei Differenzsignalen der Art DIm oder DR gebildet, wobei das Kombinationssignal sich vorzugsweise von einer einfachen Linearkombination unterscheidet. Das Kombinationssignal kann beispielsweise dem Quotienten der Differenzsignale DIm und DR entsprechen. Dieses Kombinationssignal ermöglicht es erstmalig, ein der Leitfähigkeit des Materials des Suchobjektes proportionales Leitfähigkeits-Signal zu bilden, das dem Quotienten aus Selbstinduktivität und Widerstand des Materials des Suchobjektes entspricht. Mit Hilfe dieses Faktors bzw. Signals kann ein Kopplungssignal GI gebildet werden, das für die spezielle Suchsituation (Art und Aufbau der Suchspulenanordnung, Abstand zum Suchobjekt, Widerstand R2 und Selbstinduktivität L2 des Suchobjekts) spezifisch ist und die magnetischen Kopplungen zwischen Sendespule, Suchobjekt und Empfängerspule sowie die Selbstinduktivität des Suchobjektes repräsentiert. Das Kopplungssignal GI kann bezüglich der Imaginärachse und der Frequenz f1 beispielsweise wie folgt gebildet werden:

$$GI = DIm/(G * (1/(S+1) - V21^2)/(S+V21^2))$$

mit $G = FI1 * f1 * I11$, wobei $I11$ die Amplitude des Primärstroms der Komponente der ersten Frequenz f1 und FI1 ein Verstärkungsfaktor ist, der auch gleich 1 sein kann; $S = (R2/(f1 * L2))^2$ ; $V21 = f2/f1$ . Dieser mit keinem der bisher bekannten Verfahren ermittelbaren Faktor GI, der in der Signalauswerteeinrichtung einem entsprechenden analogen oder digitalen Signal entspricht, ermöglicht es, aus einem projizierten Gesamt-Spulensignal, das sowohl Bodensignale, als auch Signale des Suchobjektes enthält, den durch das metallische Suchobjekt erzeugten Anteil der Spannung für eine gegebene Frequenz zu bestimmen. Ein derartiges projiziertes Metallsignal kann beispielsweise bezüglich der Imaginärachse und der Frequenz f1 wie folgt gebildet werden: $UI1 = (GI/FI1) * G * (1/S+1))$ . Dieser Metall-Anteil kann, ggf. nach Multiplikation mit einem frequenzspezifischen Verstärkungsfaktor zum Zwecke des Feinabgleichs, von dem der entsprechenden Frequenz zugeordneten Imaginärteil oder Realteil der Gesamtspannung substrahiert werden. Es entsteht durch Subtraktion somit ein Bodensignal. Entsprechende Bodensignale können für alle verwendeten Frequenzen jeweils für die imaginäre Achse und für die reale Achse gebildet und zur Auswertung verwendet werden.

Es kann beispielsweise bei der Minensuche Umgebungsbedingungen geben, bei denen die durch leitfähigen und/oder magnetisierbaren Boden verursachten Störsignale so groß sind, daß praktisch entweder nur Imaginär-Differenzsignale vom Typ DIm oder nur Real-Differenzsignale vom Typ DR zur Metalldetektion herangezogen werden können. Eine Bestimmung der Leitfähigkeit durch Division von DIm und DR ist dann unter Umständen nicht mehr möglich. Die Schwierigkeiten können durch Hinzufügen von mindestens einer weiteren Frequenzkomponente des Erregerstromes bzw. Primärstromes entsprechend mindestens einer weiteren diskreten Frequenz f3 behoben werden, die sich von der ersten Frequenz f1 und von der zweiten Frequenz f2 unterscheidet.

Analog dem bereits beschriebenen Verfahren können reale und imaginäre Projektionssignale auch bezüglich der dritten Frequenz gebildet werden. Ein Projektionssignal kann mit einem Multiplikations- bzw. Verstärkungsfaktor multipliziert werden, so daß ggf. gewichtete Projektionssignale entstehen. Zur Weiterverarbeitung werden entweder gewichtete Projektionssignale genutzt, die alle einem Realsignal entsprechen oder die alle einem Imaginärsignal entsprechen. Aus Paaren von gewichteten Projektionssignalen eines gemeinsamen Typs (Realsignal oder Imaginärsignal) können dann z.B. ein erstes Projektions-Differenzsignal bezüglich der Frequenzen f2 und f1 und mindestens ein zweites Projektions-Differenzsignal bezüglich der Frequenzen f3 und f1 gebildet werden. Mit Hilfe der mindestens einen zusätzlichen dritten Frequenz ist es demgemäß möglich, bezüglich eines Anteils (Realanteil oder Imaginäranteil) jeweils zwei oder drei (bzw. noch weitere) Projektions-Differenzsignale zu bilden.

Nach dem Dreifrequenzverfahren - und auch nach Verfahren mit noch mehr als 3 Frequenzen - sind beispielsweise zwei verschiedene Signale vom Typ DIm bzw. zwei verschiedene Signale von Typ DR erzeugbar.

Diese Signale können jeweils einzeln zur Metalldetektion und/oder Metallidentifizierung verwendet werden und man kann beispielsweise den Kanal mit dem besseren Nutz-Störsignalverhältnis zur weiteren Auswertung heranziehen.

Besonders vorteilhaft ist es, wenn ein Projektions-Kombinationssignal gebildet wird, das durch Kombination von mindestens zwei Projektions-Differenzsignalen gebildet wird. Wird das Projektions-Kombinationssignal aus dem Quotient zweier Projektions-Differenzsignale gebildet, so ist aus dem Kombinationssignal wieder ein Schluß auf die Leitfähigkeit des entsprechenden Materials möglich. Auch hieraus kann dann ein Bodensignal abgeleitet werden.

Beim Mehrfrequenzverfahren mit mehr als zwei Frequenzen ist mit Vorteil eine Wahl zwischen einer Auswertung in der imaginären Richtung und einer Auswertung in der realen Richtung möglich, so daß bei der Auswertung die Richtung gewählt werden kann, die eine bessere Störunterdrückung ermöglicht.

Ein Projektions-Kombinationssignal kann auch durch eine Summierung der Beträge mindestens zweier Projektions-Differenzsignale in einem Summationsglied einer analogen Schaltung oder eines Mikroprozessors oder dergleichen gebildet werden. Auch von Differenzsignalen vom Typ DIm, DR können Betragssignale gebildet und weiterverarbeitet werden.

Bei ferromagnetischen metallischen Materialien repräsentiert der Winkel zwischen realer Achse und Spannungs-Zeiger das Produkt aus Permeabilität und elektrischer Leitfähigkeit. Dieser Umstand kann mit Vorteil berücksichtigt werden, wenn mindestens eine, vorzugsweise zwei Komponenten des Primärstromes I1 eine Niedrigfrequenz f0 haben, die kleiner als 1 KHz ist, vorzugsweise zwischen 50 Hz und 500 Hz beträgt und insbesondere bei ca. 100 Hz liegt.

Durch Verwendung von Niedrigfrequenzen können Transformationssignale gewonnen werden. Mittels eines Transformations-Signals kann eine Transformation des Spulensignals mit ferromagnetischem Signalanteil in ein transformiertes Spulensignal ohne diesen Anteil durchgeführt werden. Die weitere Auswertung des transformierten Spulensignals kann dann wie vorstehend beschrieben ausgeführt werden. Die ermittelte Permeabilität kann als Meßwert analog und/oder digital angezeigt werden. Über entsprechende Zuordnungstabellen kann die Metallart direkt angezeigt werden. Diese Information kann mit der Leitfähigkeits-Information verglichen werden, wodurch eventuelle Mehrdeutigkeiten vermieden werden können.

Wenn keine magnetischen Störer vorhanden sind, kann eine einzelne Niedrigfrequenz f0 ausreichen. Wenn magnetische Störer vorhanden sind, werden vorzugsweise mindestens zwei unterschiedliche Niedrigfrequenzen verwendet und es kann in Analogie zum bisher Beschriebenen ein entsprechendes Imaginär-Differenzsignal zweier Niedrigfrequenzen gebildet werden. Störeinflüsse durch magnetisierbare Störer sind damit unterdrückt. Auch die Realteile der durch die zwei Niedrigfrequenzen induzierten Spannungen können zur Unterdrückung von leitfähigem Boden und Salzwasser und zur Bildung des Transformations-Signals herangezogen werden.

Zur Erlangung eines ortsauflösenden Bodensignales wird bei einem bevorzugten Verfahren der Suchbereich abgerastert bzw abgescannt. Das Abrastern kann erfolgen, indem ein räumlich veränderliches, in den Boden des Suchbereiches eindringendes elektromagnetisches Wechselfeld erzeugt wird und indem die von dem elektrisch leitfähigen und/oder magnetisierbaren Boden bewirkte Veränderung des Wechselfeldes nachgewiesen und in ein mit der räumlichen Veränderung des Wechselfeldes korreliertes, ortsauflösendes Bodensignal umgewandelt wird.

Es ist beispielsweise möglich, die Abrasterung des Suchbereiches so vorzunehmen, daß die Bodensonde relativ zum Suchbereich, vorzugsweise im wesentlichen parallel zur Bodenoberfläche entlang einer Suchbahn bewegt wird, die vorzugsweise den Bereich des Teils enthält. Die Suchbahn kann eine gerade Linie sein, entlang der die Bodensonde entweder einmal in eine Richtung oder ggf. mehrfach hin und her bewegt wird. Das Bodensignal liegt dann in Form eines Linien-Scans vor, wobei die Linie endlicher Länge, vorzugsweise in ihrer Mitte, die Position des Teils enthalten kann. Die Suchbahn kann auch eine Linie sein, die sich aus einer Überlagerung einer geradlinigen ersten Bewegung und einer geradlinigen, im vorzugsweise rechten Winkel zur ersten Bewegung verlaufenden zweiten Bewegung ergibt, wobei die Suchsonde vorzugsweise entlang einer mäanderförmigen Suchbahn mit geraden Suchbahnabschnitten bewegt wird. Auf dieser Weise kann eine Fläche mit einer Vielzahl vorzugsweise paralleler, insbesondere geradliniger Linienscans abgerastert werden. Es ist ebenfalls möglich, daß die Suchbahn eine Linie ist, die sich aus einer Überlagerung einer mindestens abschnittsweise geradlinigen ersten Bewegung und einer kreisbogenförmigen, insbesondere kreisförmigen zweiten Bewegung ergibt. Die Bodensonde kann beispielsweise an einem linear bewegbaren, drehbegrenzten oder voll drehbaren Rotor exzentrisch zu dessen Drehachse angeordnet sein und/oder an dem Rotor linear, vorzugsweise radial bewegbar sein.

Während die soeben beschriebene Abrasterung eine Bewegung zumindest einer Sendespule bzw. Erregerspule der Bodensonde relativ zum Suchbereich erfordert, ist es auch möglich, daß die Untersuchung, insbesondere die Abrasterung des Suchbereiches derart erfolgt, daß eine Bodensonde mit einer induktiven Suchspulenanordnung mit mindestens zwei unabhängig ansteuerbaren, räumlich getrennten Sendespulen und mindestens einer Empfängerspule ortsfest zum Suchbereich positioniert wird und daß durch geeignete Beaufschlagung der räumlich getrennten Sendespulen in vorzugsweise periodischer Folge mit unterschiedlichen Strömen erreicht wird, daß ein räumlich veränderliches elektromagnetisches Wechselfeld erzeugt wird. Dieses hat vorzugsweise im wesentlichen gleichbleibende Amplitude und ändert seine Richtung weitgehend kontinuierlich mit einer der genannten Folge entsprechenden Geschwindigkeit bzw., bei periodischer Folge, Wiederholungsfrequenz. Die vom Boden bewirkten Veränderungen des Wechselfeldes werden durch die Empfängerspule in ein mit der räumlichen Veränderung korreliertes Bodensignal umgewandelt. Dieses Verfahren ermöglicht es, daß der Suchbereich und damit die Umgebung des metallischen Teiles von verschiedenen Richtungen "beleuchtet" wird. Es kann z.B. ein linear hin- und her pendelndes Wechselfeld oder, bei mindestens drei kreisförmig zueinander angeordneten Sendespulen, ein rotierendes Erregerfeld erzeugt werden.

Die ortsauflösende Auswertung des Bodensignals kann derart erfolgen, daß das Bodensignal durch mindestens eine mit der Bodensonde signalübertragend, beispielsweise durch Kabel oder Funk verbundene Signalauswerteeinrichtung automatisch der durch Lokalisierungsmittel festlegbaren Position der Bodensonde oder, beim letztgenannten Verfahren, der Richtung des sich bei stationären Sendespulen räumlich ändernden Wechselfeldes zugeordnet wird. Das Bodensignal kann zeitgleich oder zeitversetzt zu mindestens einer Abbildung des Suchobjektes umgewandelt werden. Die Abbildung des Suchobjektes kann, ggf. nach Speicherung von das ortsauflösende Bodensignal repräsentierenden Daten in einer vorzugsweise elektronischen Speichereinrichtung, auf einem tempoären, ein- oder zweidimensionalen Aufzeichnungsträger und/oder auf einen permanenten flächigen Aufzeichnungsträger wie einem Blatt Papier erfolgen, wobei der Aufzeichnungsträger eine dem Suchbereich entsprechende Abbildungsfläche aufweisen kann. Eine Abbildung auf einem Bildschirm, z.B. einem LCD-Bildschirm ist möglich und bevorzugt. Die Abbildung des Suchobjektes kann auch in einem ein- oder zweidimensionalen Feld von Leuchtdioden erfolgen, bei denen beispielsweise die Leuchtstärke und/oder die Farbe des Lichtes mit der Stärke des Bodensignales korreliert ist. Wenn die Untersuchung auch Tiefeninformationen liefert, kann auch eine pseudo-dreidimensionale Abbildung des Suchbereichs erzeugt werden. Beispielsweise kann eine Abrasterung auf verschiedene Tiefen "fokussiert" werden und die Tiefeninformationen können jeweils ein- oder zweidimensional, also linien- oder scheibenweise dargestellt werden.

Eine Verstärkung des durch eine Wirbelstromsonde erzeugbaren Bodensignals und damit eine Erhöhung des "Kontrastes" zwischen bodengefüllten und hohlen oder kunststoffgefüllten Volumenbereichen läßt sich dadurch erzielen, daß vor der Untersuchung, insbesondere der Abrasterung, die elektrische Leitfähigkeit und/oder die Magnetisierbarkeit des Bodens erhöht wird. Insbesondere kann dies dadurch erfolgen, daß der Boden im Suchbereich mit einer die elektrische Leitfähigkeit und/oder die Magnetisierbarkeit des Bodens erhöhenden Flüssigkeit getränkt wird. Dieser Verfahrensschritt kann sowohl vor, als auch nach Feststellung der Position des Teils erfolgen, erfolgt jedoch vorzugsweise danach. Zur Erhöhung der elektrischen Leitfähigkeit des Bodens kann die Flüssigkeit gelöste Mineralstoffe enthalten, insbesondere kann die Flüssigkeit Salzwasser sein, was ggf. aus dem Meer geschöpft werden kann. Alternativ oder zusätzlich kann die Flüssigkeit eine Dispersion von ferromagnetischen und/oder ferrimagnetischen Partikeln in Wasser, insbesondere Salzwasser sein. Die Flüssigkeit kann mit Ferritpartikeln versetztes Meerwasser sein. Die Umwelt wird in der Regel durch derartige Flüssigkeiten nicht belastet.

Diese Bodenvorbereitung zur Kontrasterhöhung kann insbesondere bei im wesentlichen sandigen Böden, beispielsweise in Wüstengegenden, die Effizienz des Verfahrens deutlich verbessern. Die Bodenvorbereitung kann unmittelbar vor der Untersuchung, ggf. aber auch zeitlich weit vorher, etwa Wochen oder Monate vor der eigentlichen Minensuche durchgeführt werden. Sie kann insbesondere als Vorbereitung des Bodens für die Suche nach gänzlich metallfreien Minen dienen. Der Schritt der Feststellung der Position des metallischen Teiles kann dann ggf. entfallen.

Das Tränken des Bodens kann vorzugsweise durch Besprühen und/oder Begießen des Bodens mit der Flüssigkeit herbeigeführt werden. Dabei können bodengestützte Tränkeinrichtungen eingesetzt werden, die Flüssigkeitsbehälter und Ausgußeinrichtungen und ggf. Düsen oder dergleichen aufweisen. Das Tränken des Bodens kann auch mit Hilfe eines bemannten oder unbemannten Flugkörpers aus der Luft erfolgen. Bevorzugt ist der Einsatz von Hubschraubern oder Flugzeugen. Insbesondere können Feuerlöschflugzeuge eingesetzt werden, die das Wasser der Flüssigkeit im Fluge von Flüssen, Seen oder Meeren aufnehmen können und die ggf. mit Einrichtungen ausgerüstet sind, die ein Versetzen des Wasser mit Salzen und/oder den genannten magnetischen Partikeln ermöglichen.

Die Erfindung schlägt auch eine Detektionsvorrichtung zur Lokalisierung und Identifizierung von Suchobjekten der beschriebenen Art vor. Die Detektionsvorrichtung ist insbesondere zur Durchführung des erfindungsgemäßen Verfahrens geeignet. Sie weist mindestens einen Sondenträger auf, der mindestens eine für elektrisch leitfähiges Material empfindliche Metallsonde und mindestens eine zur Untersuchung, vorzugsweise zur Abrasterung bzw. zum Abscannen eines das Teil umgebenden Suchbereiches ausgebildete Bodensonde aufweist, die ein ortsauflösendes Bodensignal erzeugt. Vorzugsweise ist die Bodensonde relativ zum Sondenträger beweglich. Es ist mindestens eine mit der Bodensonde signalübertragend verbundene Signalauswerteeinrichtung zur ortsauflösenden Auswertung des Bodensignals vorgesehen. Die Metallsonde weist vorzugsweise mindestens eine induktive Suchspulenanordnung auf. Obwohl die Bodensonde, wie beschrieben, auch nach anderen als induktiven Verfahren arbeiten kann, ist eine Bodensonde bevorzugt, die mindestens eine induktive Suchspulenanordnung mit mindestens einer Sendespule und mindestens einer Empfängerspule aufweist.

Die Metallsonde und die Bodensonde können ihre Aufgabe entsprechend verschieden ausgebildet sein und sich z.B. in Größe, Anzahl von Sende- und Empfangsspulen, Anzahl von Leiterwindungen, Herstellungsart (z.B. Drahtwicklungen oder gedruckte Leiterbahnen) unterscheiden. Sie können räumlich getrennt voneinander angeordnet sein. Eine vorteilhafte Ausführungsform zeichnet sich dadurch aus, daß die induktive Suchspulenanordnung der Metallsonde und die induktive Suchspulenanordnung der Bodensonde durch dieselbe induktive Suchspulenanordnung gebildet sind. Diese Ausbildung kann besonders klein und leicht sein und nutzt die Erkenntnis, daß eine induktive Suchspulenanordnung durch unterschiedliche Betriebsarten bzw. Auswerteverfahren für das Sondensignal einerseits als Metallsonde und andererseits als Bodensonde verwendbar sein kann. Dies ist durch die beschriebene Beaufschlagung der Sendespule der Suchspulenanordnung mit mindestens zwei, vorzugsweise mindestens drei voneinander verschiedenen Erregerfrequenzen bzw. Sendefrequenzen und durch eine Auswertung des an der Empfangspule anliegenden Signals in der komplexen Spannungsebene möglich.

Eine Suchspulenanordnung kann gleichzeitig mit verschiedenen Erregerfrequenzen beaufschlagt werden. Dazu ist die Sendespule der Suchspulenanordnung an einer Erregerstromquelle angeschlossen, die zur Erzeugung von vorzugsweise sinusförmigem Wechselstrom einer diskreten ersten Frequenz und mindestens einer von der ersten Frequenz verschiedenen diskreten zweiten Frequenz ausgebildet ist. Für den abwechselnden Betrieb der induktiven Suchspulenanordnung als Metallsonde einerseits und Bodensonde andererseits können entsprechende Umschaltmittel zur Umschaltung der Signalauswerteeinrichtung zwischen den Betriebsarten vorgesehen sein. Es ist auch möglich, die entsprechenden Auswertungen parallel vorzunehmen und die Ergebnisse zeitgleich oder zumindest in einer gemeinsamen Abbildung abzubilden. Vorzugsweise werden drei oder mehr als drei voneinander verschiedene Frequenzen erzeut. Vorzugsweise liegt mindestens eine der Frequenzen zwischen 10 und 1000 Hz, insbesondere bei ca. 100 Hz. Signale dieser Niedrigfrequenzen können dazu verwendet werden, bei ferromagnetischen Teilen den Einfluß der Magnetisierbarkeit vom Einfluß der elektrischen Leitfähigkeit auf das Spulensignal zu trennen.

Eine Detektionsvorrichtung kann als Ganzes bewegt werden, um eine Bewegung der Bodensonde zu erreichen, die in diesem Fall fest am Sondenträger montiert sein kann. Es ist auch möglich, daß die induktive Suchspulenanordnung der Bodensonde mindestens zwei räumlich voneinander getrennte Sendespulen aufweist und daß die Erregerstromquelle so ausgebildet ist, daß die Sendespulen in vorzugsweise periodischer Folge mit unterschiedlichen Strömen derart angesteuert werden, daß das resultierende elektromagnetische Wechselfeld bei im wesentlichen gleichbleibender Amplitude seine Richtung vorzugsweise kontinuierlich mit einer der genannten Folge entsprechenden Wiederholungsfrequenzfrequenz ändert.

Mit Vorteil kann der Sondenträger Sondenführungsmittel aufweisen, die zur Führung der Suchspulenanordnung der Bodensonde relativ zum Sondenträger entlang einer im wesentlichen parallel zur Bodenoberfläche ausrichtbaren Suchbahn ausgebildet sind. Die Sondenführungsmittel können mindestens eine Linearführung und/oder mindestens ein um einen Drehwinkel von vorzugsweise 360° drehbares Drehelement aufweisen, an der die Suchspulenanordnung der Bodensonde exzentrisch zur senkrecht zur Bodenoberfläche ausrichtbaren Drehachse angeordnet ist. Das Drehelement kann beispielsweise ein scheibenwischerähnlicher Schwenkarm mit beispielsweise auf 180° begrenzten Drehwinkel sein oder ein voll drehbarer Rotor, vorzugsweise in Form einer Scheibe. An dem Drehelement kann eine vorzugsweise radial zur Drehachse verlaufende Linearführung für die Suchspulenanordnung der Bodensonde vorgesehen sein. An einer ggf. linear bewegbaren rotierenden Scheibe können auch in vorzugsweise gleichem radialen Abstand von der Drehachse eine Metallsonde und eine davon getrennte Bodensonde angeordnet sein. Diese können bei langsamem Vorschub der der rotierenden Scheibe abwechselnd im wesentlichen die gleiche Suchbahn entlanglaufen.

Der Sondenträger kann an einem bemannten oder unbemannten Fahrzeug vorgesehen sein. Dies ist insbesondere bei großen und/oder schweren Bodensonden vorteilhaft und kann insbesondere dann geboten sein, wenn verschiedene Detektionsverfahren mit entsprechend umfangreicher, jeweils für die Verfahren spezifischer, apparativer Ausstattung angewendet werden sollen. Bei einer Weiterbildung der Erfindung ist der Sondenträger durch eine oder mehrere Personen tragbar und weist vorzugsweise Tragehilfsmittel, insbesondere in Form mindestens einer am Sondenträger angebrachten Tragestange oder dergleichen auf. Bei einer von einer einzelnen Person handhabbaren Ausführungsform ist der Sondenträger am unteren Ende einer Tragestange angeordnet. Das Gewicht des Sondenträgers mit den Sonden beträgt vorzugsweise weniger als 20 kg, insbesondere weniger als 10 kg. Seine horizontalen Maße liegen vorzugsweise in der Größenordnung von unter einem Meter, insbesondere bei weniger als 60 cm. Eine tragbare Ausführung des Sondenträgers ist insbesondere dann realisierbar, wenn Metallsonde und Bodensonde als induktive Sonden ausgebildet sind und wenn vorzugsweise beide Sonden durch die gleiche induktive Suchspulenanordnung gebildet werden, deren verschiedene Betriebszustände bzw. Signalauswerteverfahren sie einmal als Metallsonde und zum anderen als Bodensonde wirken lassen.

Der Begriff des Sondenträgers ist weit zu fassen, so daß der Sondenträger auch als ein geeignet geformter, die Sonden beispielsweise an einem Fahrzeug oder an der Tragestange haltender Halter ausgebildet sein kann. Vorzugsweise weist der Sondenträger ein im wesentlichen geschlossenes, vorzugsweise im Grundriß etwa rechtwinkeliges Gehäuse auf, das vorzugsweise einen insbesondere im wesentlichen ebenen, ggf. abnehmbaren Gehäuseboden haben kann. Die Suchspulenanordnung ist vorzugsweise innerhalb des Gehäuses angeordnet und damit vor Beschädigung und/oder Verschmutzung geschützt. Innerhalb des Gehäuses kann mindestens eine vorzugsweise parallel zum Gehäuseboden verlaufende Linearführung vorgesehen sein, in der die Suchspulenanordnung linear beweglich geführt ist.

Da in dem Suchbereich ggf. eine explosive druck- und/oder kontaktempfindliche Mine liegen könnte, sollte eine unbeabsichtigte Auslösung der Mine bei der Untersuchung des Bodens vermieden werden. Vorzugsweise sind daher Abstützmittel zur ortsfesten Abstützung des Sondenträgers und der Sonden in einem Abstand oberhalb der Bodenoberfläche vorgesehen. Die Abstützmittel sind vorzugsweise am Sondenträger angebracht. Wenn beispielsweise der Sondenträger über den Gehäuseboden nach unten hinausragende, vorzugsweise abnehmbare oder abklappbare Abstützmittel zur ortsfesten Abstützung des Gehäusebodens in einem Abstand oberhalb der Bodenoberfläche aufweist, dann kann der Sondenträger ortsfest oberhalb des Bodens angeordnet werden und berührt den Boden nicht. Die Abstützmittel können vorzugsweise in Form von im Randbereich des Gehäusebodens oder des Sondenträgers angeordneten Wülsten, Stegen oder Füßen mit kleinflächigen Abstützflächen ausgebildet sein. Es wird dadurch im Bereich des metallischen Teils, und damit möglicherweise im Bereich der Mine kein Druck ausgeübt. Außerdem bleibt der Abstand zwischen Bodenoberfläche und den Sonden während der Untersuchung konstant, was sich auf die Reproduzierbarkeit und Auswertbarkeit der Signale positiv auswirkt.

Die Sondenführungsmittel können mindestens einen durch einen beispielsweise mittels einer Welle antreibbaren, parallel zu einer Linearführung umlaufenden Riemen mit einem seitlich abragenden Bolzen umfassen. Dieser kann in eine vorzugsweise senkrecht zu der Linearführung verlaufende Nut an einem Träger der Suchspulenanordnung eingreifen. Um Störeinflüsse der Sondenführungsmittel und der Antriebsmittel auf die Sonden zu vermeiden, ist es von Vorteil, wenn zumindest der Riemen und/oder der Bolzen und/oder die Welle im wesentlichen aus unmagnetischem, elektrisch nicht leitenden Material bestehen, insbesondere aus Kunststoff. Besonders vorteilhaft ist es, wenn mit Ausnahme der Leiterbahnen der Suchspulenanordnung und der elektrischen Kabel alle Bauteile des Sondenträgers im wesentlichen metallfrei sind.

Die Antriebsmittel für die Welle können zwar am oder im Sondenträger angeordnet sein. Um Störungen der Sonden durch den Antrieb zu vermeiden, kann ein Antrieb auch entfernt von den Sonden, vorzugsweise am oberen Ende der Tragestange vorgesehen sein und insbesondere einen Elektromotor umfassen. Die Welle kann außen entlang der Tragestange zum Sondenträger geführt werden. Vorzugsweise ist jedoch die Tragestange innen hohl und die Welle verläuft vorzugsweise innerhalb der Tragestange. Obwohl die Tragestange auch aus Metall, beispielsweise Aluminium sein kann, ist sie vorzugsweise aus einem elektrisch nicht leitenden Material, insbesondere aus vorzugsweise faserverstärktem Kunststoff. Auch dies vermeidet Störungen insbesondere bewegter induktiver Sonden und sorgt für geringes Gewicht der gesamten Detektionsvorrichtung.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung oder auf anderen Gebieten verwirklicht sein und vorteilhafte Ausführungen darstellen können. Ausführungsbeispiele der Erfindung sind in den Zeichnungen dargestellt. Es zeigen:

Fig. 1     eine Seitenansicht im Schnitt einer tragbaren Minensuch- und Minenidentifikationsvorrichtung,

Fig. 2     eine Seitenansicht im Schnitt des Sondenträgers der Vorrichtung in Fig. 1 in vergrößerter Darstellung,

Fig. 3     eine Draufsicht im Schnitt des Sondenträgers von Fig. 1 und 2 und

Fig. 4     eine Aufsicht auf ein Anzeige- und Bedienfeld der in den Figuren 1 bis 3 gezeigten Vorrichtung.

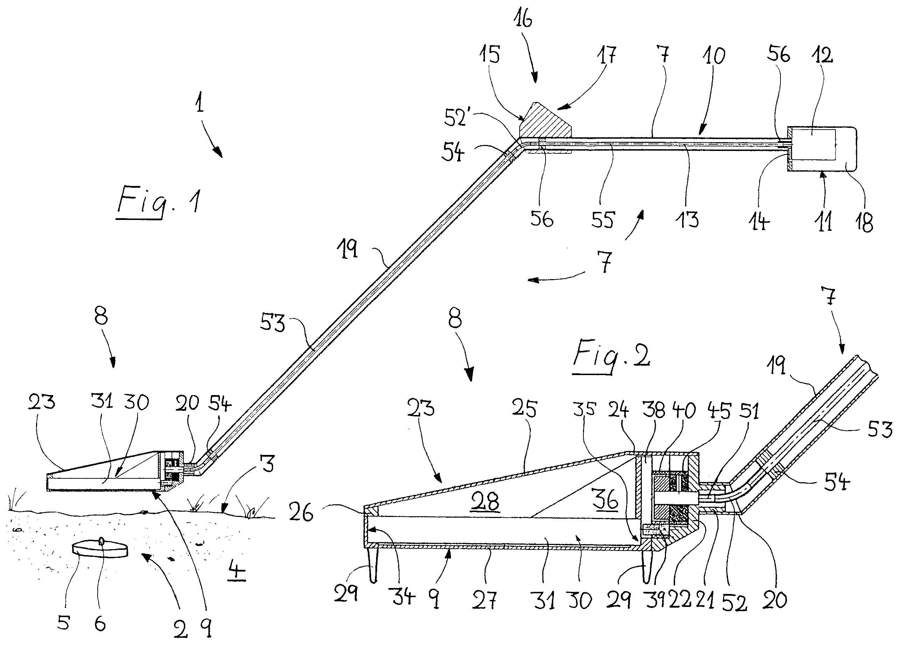

In Fig. 1 ist eine als tragbares Minensuchgerät 1 ausgebildete Detektionsvorrichtung zur Lokalisierung und Indentifizierung von Suchobjekten gezeigt. Es kann allgemein zur Metallsuche eingesetzt werden. Bevorzugtes Anwendungsgebiet ist die Minensuche, insbesondere nach Plastikminen. Entsprechend zeigt Fig. 1 ein als Plastikmine 2 ausgebildetes Suchobjekt, das unter der Bodenoberfläche 3 im Boden 4 ca. 10 cm unterhalb der Bodenoberfläche vergraben ist. Die stark schematisch dargestellte Plastikmine 2 hat einen im wesentlichen aus Kunststoff bestehenden tellerförmigen Körper 5 und zentrisch angeordnet einen metallischen, auf Druck reagierenden Zünder 6.

Das Minensuch- und Minenidentifikationsgerät 1 weist einen am unteren Ende einer zweifach geknickten Tragestange 7 angeordneten Sondenträger 8 auf, der mit seiner Unterseite 9 einige cm oberhalb der Bodenoberfläche 3 gehalten ist. Die Tragestange 7 wird durch ein innen hohles Kunststoffrohr aus faserverstärktem PVC gebildet, das leicht und verwindungssteif ist. Das Tragerohr 7 hat einen oberen, im wesentlichen horizontal zu haltenden Abschnitt 10, dessen Längsachse parallel zur ebenen Unterseite 9 des Sondenträgers 8 verläuft. Am hinteren Ende des oberen Tragstangenabschnittes 10 ist in einem wasserdicht abgeschlossenen Kunststoff-Gehäuse 11 ein netzunabhängig durch Batterie oder Akkumolatoren mit Leistung versorgter Elektromotor 12 mit seiner Abtriebsachse koaxial zur zentralen Achse 13 des oberen Abschnittes 10 befestigt. Das Gehäuse 11 enthält auch die Elektronik der Signalauswerteeinrichtung. Eine Synchronisationseinheit 14, die an der Abtriebswelle des Elektromotors 12 angreift, dient zur Ermittlung der Drehstellung der Abtriebsachse.

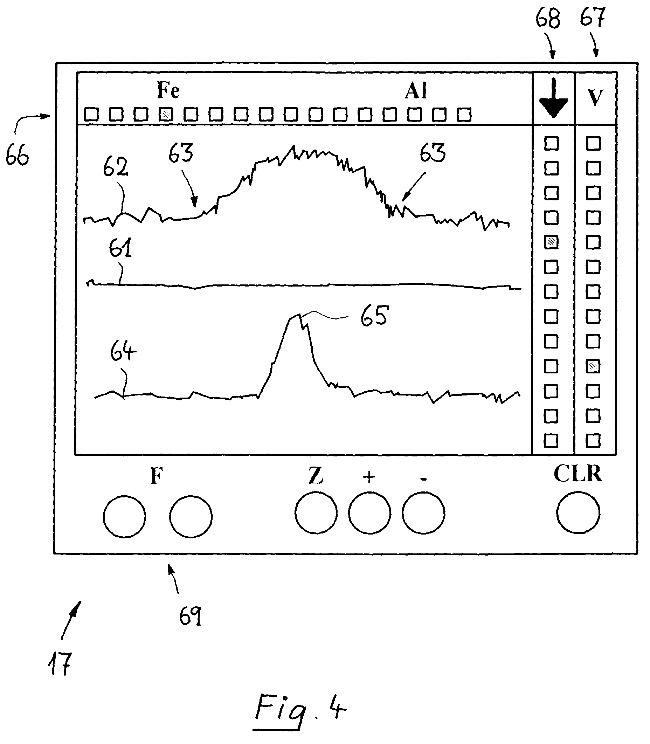

Am vorderen Ende des oberen Abschnittes 10 ist auf der Tragestange eine in einem wasserdichten Kunststoff-Gehäuse 15 untergebrachte Bedien- und Anzeigeeinheit 16 für das Minensuchgerät befestigt. Ein gegen die Achse 13 in einem Winkel von ca. 40° nach hinten geneigtes, ebenes Anzeige- und Bedienfeld 17 (Fig. 4) ermöglicht einem Benutzer die Einstellung von Betriebsparametern der Minensucheinrichtung und die Verfolgung und Kontrolle der Suchergebnisse. Die Bedien- und Anzeigeeinheit ist durch nicht gezeigte elektrische Verbindungsmittel mit dem Elektromotor 12 und der im Gehäuse 11 verschmutzungssicher und feuchtedicht angeordneten Signalauswerteelektronik verbunden.

Am vorderen Ende des oberen Abschnittes 10 schließt sich an diesen ein im Winkel von ca. 45° schräg nach vorne verlaufender mittlerer Abschnitt 19 der Tragestange 7 an, an dem bei manchen Ausführungsformen ein verstellbarer Haltegriff zum Halten und zur besseren Führung des Minensuchgerätes angebracht sein kann. An das untere Ende des mittleren Abschnittes 19 schließt sich ein parallel zur oberen Abschnitt 10 verlaufender kurzer unterer Abschnitt 20 der Tragestange 7 an.

Wie in Fig. 2 besser zu erkennen ist, ist in eine vordere Öffnung des unteren Abschnittes 20 der Tragestange 7 ein zapfenförmiger Ansatz 21 eingesteckt, der an einer in der Figur senkrechten, breiten Rückwand 22 des Sondenträgers 8 einstückig mit der Rückwand ausgebildet ist. Der Zapfen 21 wird im unteren Abschnitt 20 durch Schrauben festgehalten. Dadurch ist der Sondenträger 8 lösbar mit der Tragestange 7 verbunden.

Die in ihrem unteren Bereich nach vorne angeschrägte, in diesem Bereich an ihrer Oberseite Stufen aufweisende Rückwand 22 ist aus verwindungssteifem Kunststoff gefertigt und bildet ein tragendes Element eines feuchtedicht abschließbaren Gehäuses 23 des Sondenträgers 8. Das Gehäuse 23 weist weiterhin eine auf der Oberseite der Rückwand 22 rechtwinklig an dieser befestigte, nach vorne ausgerichtete obere Wandung 24 auf, an die ein schräg nach vorne verlaufender, ebener Deckel 25 anschließt. Dieser ist im gezeigten Beispiel an die obere Wandung 24 angelenkt, kann aber auch vollständig abnehmbar ausgebildet sein, beispielsweise kann er aufgeschraubt sein. Durch den Deckel ist jederzeit ein leichter Zugang in den Innenraum des Gehäuses zu schaffen, beispielsweise um Suchspulen auszuwechseln oder Reparaturen vorzunehmen. Der Deckel 25 liegt im Bereich seiner Vorderkante auf einer entsprechend angeschrägten oberen Auflagefläche der Vorderwand 26 des Gehäuses auf, deren Höhe geringer ist als die der Rückwand und die mit ihrer Vorderseite parallel zur Rückwand verläuft. Die Vorderwand 26 und die Rückwand 22 werden unten durch einen im wesentlichen ebenen Gehäuseboden 27 verbunden. Das Gehäuse wird seitlich durch Seitenwände abgeschlossen, von denen in Figuren 1 und 2 nur die Innenseite der rechten Seitenwand 28 zu erkennen ist. An der Unterseite 9 des Gehäuses 23 sind in Fig. 2 zwei Klappfüße 29 angebracht, die im eingeklappten Zustand im Bodenbereich des Gehäuses versenkt sind. Die gezeigten Klappfüße 29 sind auf der rechten Seite 28 im Bereich der abgerundeten Ecken des Gehäuses befestigt. Sie dienen zusammen mit den nicht sichtbaren Klappfüßen an den gegenüberliegenden Ecken zur Abstützung des Sondenträgers 23 auf der Bodenoberfläche 3, wodurch eine ortsfeste Aufstellung des Gehäuses relativ zum Boden erreicht und ein im wesentlichen gleicher Abstand zwischen Gehäuse bzw. Suchspulenanordnung und Bodenoberfläche gewährleistet werden kann.

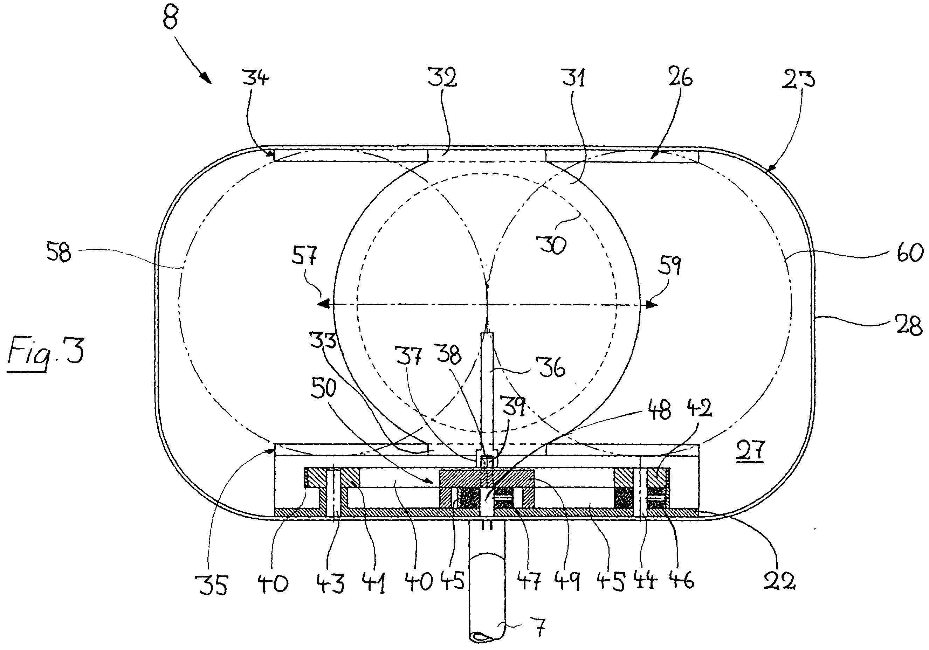

Innerhalb des Gehäuses 23 ist eine induktive Suchspulenanordnung 30 angeordnet. Die Suchspulenanordnung ist auf einen flachen, runden Träger aus elektrisch nicht leitendem Kunststoff in Form von Leiterbahnen ausgebildet, die im Dickschichtverfahren auf den Träger aufgebracht wurden. Es sind auch Suchspulenanordnungen mit Drahtwicklungen möglich. Bei der gezeigten Suchspulenanordnung 30 sind mehrere ebene Lagen entsprechend elektrisch miteinander verbundener, durch elektrisch isolierende, Kunststoffplatten vertikal getrennter Leiterbahnen vorhanden. Wie in Fig. 3 besser zu erkennen ist, hat die Suchspulenanordnung mit dem Träger einem im wesentlichen kreisrunde Form, wobei an der Vorderseite und an der Rückseite des Trägers 31 der Suchspulenanordnung Fortsätze 32, 33 ausgebildet sind, die parallel zur Vorderwand 26 bzw. Rückwand 22 verlaufende Kanten aufweisen.

Der Träger 31 der Suchspulenanordnung greift mit seinem vorderen Fortsatz 32 in eine zur Rückwand hin geöffnete Führungsnut 34 der Vorderwand 26 ein. Der hintere Fortsatz 33 greift in eine entsprechend zur Vorderwand 26 hin geöffnete Führungsnut 35 der Rückwand 22 ein. Die Führungsnuten 34, 35 bilden somit eine parallel zum Gehäuseboden 27 verlaufende Linearführung, in der der Träger mit der Suchspulenanordnung linear beweglich und kippfrei geführt ist. Zwischen den Führungsnuten schwebt der Träger 31 frei in einem Abstand oberhalb des Gehäusebodens. Dies fördert eine widerstandsarme Bewegung des Trägers 30 in den Führungen 34, 35.

Auf dem Träger 31 ist ein senkrecht zur Trägerebene stehendes, keilförmig nach vorne abgeschrägtes, im wesentlichen plattenförmiges Keilelement 36 befestigt, das unter anderem der Versteifung der Trägeranordnung dient und das im Bereich seiner Hinterkante einen verbreitete Querschnitt aufweist. In dem verbreiterten Abschnitt 37 ist eine senkrecht zu den Führungsnuten 34, 35 bzw. zum Gehäuseboden 27 verlaufende, zur Rückwand 22 hin geöffnete Führungsnut 38 ausgebildet. In die Führungsnut 38 greift, im wesentlichen seitenspielfrei, ein runder Kunststoffbolzen 39 ein, der fest in einer Schlaufe steckt, die an der Außenseite eines parallel zur Rückwand bzw. zu den Führungsnuten 34, 35 umlaufenden Zahnriemens 40 aus Gummi aufvulkanisiert ist. Der Zahnriemen 40 läuft über achsparallel drehbare Kunststoffräder 41, 42, die auf fest mit der Rückwand 22 verbundenen, zur Vorderwand hin gerichteten, seitlichen Bolzen 43, 44 drehbar gelagert sind. Parallel zum Zahnriemen 40 verläuft auf dessen der Rückwand 22 zugewandten Seite ein weiterer kürzerer Zahnriemen 45. Dieser ist auf zwei Kunststofffrädern 46, 47 geführt. Das äußere rechte Kunststoffrad 46 ist drehfest mit dem Kunststoffrad 42 verbunden und drehbar auf dem Bolzen 44 gelagert. Das mittlere Rad 47 ist ein Ritzel und ist drehfest auf einem Zentralbolzen 48 aus Kunststoff befestigt. Der Zentralbolzen 48 ist doppelt gelagert, nämlich zum einen in einer runden Bohrung der Rückwand 22 und zum anderen in einer parallel zur Rückwand auf der anderen Seite des mittleren Rades 47 verlaufenden Vorderwand 49 eines in der Aufsicht U-förmig erscheinenden Kunststoff-Lagerteils 50 für das mittlere Rad 47. Die Vorderwand 49 des Lagerteils 50 sitzt im wesentlichen innerhalb des durch den vorderen Zahnriemen 40 umschlossenen Innenraums.

Der Zentralbolzen 48 ist vorderster Teil einer die Riemen antreibenden Welle und hat einen hinteren, zylinderförmigen Ansatz 51, der in Fig. 2 gut zu erkennen ist. Auf dem Ansatz 51 ist ein flexibles Kunststoff-Schlauchstück 52 aufgesteckt, dessen anderes Ende auf das vordere Ende einer geraden, runden Kunststoff-Welle 53 aufgesteckt ist. Wie in Fig. 1 gut zu erkennen ist, ist der mittlere Abschnitt 53 der Welle gerade und wird im Bereich nahe seiner Enden durch jeweils ein zylinderförmiges, mit einer zentralen runden Durchlaßöffnung versehenes, den Innenraum der Tragestange 7 vollständig ausfüllendes Kunststoff-Lagerelement 54 drehbar geführt. In Fig. 1 ist weiter zu erkennen, daß auf das obere Ende der Welle 53 ein weiteres flexibles Kunststoff-Schlauchstück 52 aufgesteckt ist, dessen anderes Ende auf das vordere Ende eines oberen Abschnittes 55 der Welle aufgesteckt ist. Der Wellenabschnitt 55 ist wie der Wellenabschnitt 53 aufgebaut und im Bereich seines vorderen Endes durch ein Lagerelement 56 geführt. Das hintere Ende des oberen Abschnitts 55 der Welle ist mittels einer Überwurfhülse 56 drehfest mit der Abtriebswelle des Elektromotors 12 koaxial mit dieser verbunden. Der Riementrieb der Sondenführungsmittel ist somit über eine biegsame Welle mit dem weit entfernt von der Suchspulenanordnung angeordneten Antrieb 12 kraftübertragend verbunden.

Bei Gebrauch des Minensuchgerätes 1 wird erforderlichenfalls zunächst die Suchspulenanordnung 30 in die in Fig. 3 durchgezogen gezeichnete Mittelstellung gebracht. Dieser Betriebszustand ist mit Hilfe der ein Lokalisierungsmittel für die Sonde 30 bildenden Sychronisationseinheit 14 feststellbar und kann in der Anzeige 17 angezeigt werden. In diesem Betriebszustand kann das Minensuchgerät wie andere Minensuchgeräte des Standes der Technik durch einen Sondengänger verwendet werden, indem der Sondenträger 8 in einem Abstand über der Bodenoberfläche 3 hin-und hergeschwenkt wird, wobei der Sondengänger langsam voranschreitet und die Anzeige 17 beobachtet. Das Minensuchgerät ist dabei so eingestellt, daß die durch die Suchspulenanordnung 30 gebildete Wirbelstromsonde als Metallsonde verwendet wird. Die Anwesenheit eines Metallstückes wird dann optisch und/oder akustisch über entsprechende Anzeigeeinrichtungen der Bedien- und Anzeigeeinheit 16 angezeigt, die auch einen Lautsprecher und/oder einen Kopfhöreranschluß aufweisen kann.

Dem Signal ist allerdings zu dieser Zeit nicht zu entnehmen, ob das Metallteil ein harmloser Kronenkorken oder dergleichen oder ein metallisches Teil einer Plastikmine ist. Bei der herkömmlichen Minensuche würde sich somit ggf. eine Markierung der verdächtigen Stelle oder ein vorsichtiges Untersuchen des Suchbereiches durch Graben oder dergleichen anschließen müssen. Die dadurch entstehende Zeitverzögerung macht die Minensuche auf diese Weise ineffetiv, da die Falschalarmrate besonders bei empfindlichen Metallsonden sehr hoch sein kann.

Ein die Erfindung nutzendes Suchgerät vermeidet diese Nachteile. Wird ein Metallsignal detektiert, so wird zunächst der Sondenträger mit der vorzugsweise mittig angeordneten Suchspulenanordnung möglichst gut über der verdächtigen Stelle zentriert. Der Sondenträger kann dann auf den Boden abgesetzt werden, wobei die Füße 29 für eine ortsfeste Aufstellung und einen gewissen konstanten Abstand zwischen Suchspulenanordnung und Suchobjekt sorgen. Die Signalauswerteeinrichtung kann derart ein- oder umgestellt werden, daß die Suchspulenanordnung 30 als Bodensonde zur Erzeugung eines Bodensignales verwendet werden kann. Bei Einschalten des Elektromotors 12 beginnt dessen Abtriebswelle eine Drehbewegung, die durch die Wellenabschnitte 53, 55 und die flexibelen Zwischenstücke 52, 54 auf den Zentralbolzen 48 übertragen wird. Dessen Drehung wird über das mittlere Rad 47 und den hinteren Zahnriemen 45 auf das äußere rechte Rad 46 und von diesem auf das an diesem befestigte Kunststoffrad 43 übertragen, daß sich auf dem Bolzen 44 dreht. Diese Drehbewegung überträgt sich auf den rutschfest in entsprechende Zähne des Ritzels 42 eingreifenden Zahnriemen 40, so daß der an diesem befestigte Bolzen 39 mit dem Zahnriemen 40 umläuft.

Ausgehend von der in Fig. 2 gezeigten Situation mit dem an der Unterseite des Zahnriemens 40 lokalisierten Bolzen 39 bewegt sich der Bolzen beispielsweise vom Sondenträger bzw. der Tragestange 7 aus gesehen nach links, Richtung Pfeil 57. Da der Bolzen in die senkrechte Führungsnut 38 des Suchspulenträgers 31 eingreift, wird dieser ebenfalls in Richtung 57 bewegt. Erreicht der Bolzen das linke Kunststoffrad 41, so beginnt er, um dieses nach oben umzulaufen, was eine Bewegungskomponente in Richtung weg vom Gehäuseboden 27 nach oben bewirkt. Im linken Scheitelpunkt dieser Umlaufbewegung hat der Sondenträger 31 die am weitesten links liegende linke Außenposition 58 (gestrichelt gezeichnet) erreicht. Bei weiterem Umlauf des Bolzens bewegt sich dieser weiter vertikal in der Führungsnut 38 nach oben und bewegt die Suchspulenanordnung in die entgegengesetzte Richtung 59 bis maximal zur rechten Außenposition 60 des Trägers der Suchspulenanordnung. Die Drehbewegung der Welle 53 wird somit in eine geradlinige Bewegung der als Bodensonde betriebenen Suchspulenanordnung abwechselnd in entgegengesetzten Richtungen umgewandelt. Auf diese Weise kann der Boden entlang der Linie 57, 59 untersucht bzw. abgerastert werden. Die Länge der Linie entspricht im Beispiel genau dem Durchmesser des Trägers 31.

Das Ergebnis des Linienscans kann beispielsweise in dem in Fig. 4 gezeigten LCD-Display der Bedien- und Anzeigeeinrichtung 17 in Form von "Überlaufkurven" dargestellt werden. Der nur zum Zwecke der Erläuterung eingezeichnete mittlere Linienscan 61 zeigt ein Bodensignal, wie es durch einen im wesentlichen homogenen Boden erzeugt wird. Die Signalstärke des Bodensignals bleibt hier entlang der gesamten Linie im wesentlichen konstant. Der obere Linienscan 62 repräsentiert die Stärke des Bodensignales, wenn im Bereich der Mitte des Linienscans ein bodenfreier Hohlraum existiert, in dem wahrscheinlich eine Plastikmine liegt. Dabei entspricht eine Abschwächung des Bodensignals einem Ansteigen der Linie nach oben. Im Bereich zwischen den Punkten 63 zeigt das Bodensignal eine etwa symmetrisch zur Mitte verlaufende Abschwächung. Die Punkte 63 des Beginns der Abschwächung können etwa mit dem äußeren Rand einer Plastikmine identifiziert werden. Zwischen den Rändern befindet sich ein bodenmaterialfreier "Hohlraum", der durch den Kunststoff der Plastikmine gefüllt ist. Hier ist das Bodensignal abgeschwächt. Beispielsweise durch Umschalten der Betriebsart zurück zur Verwendung der Suchspulenanordnung als Metallsonde kann der in Fig. 4 unten gezeigte Linienscan 64 zur Kontrolle aufgenommen werden. Dieses Metallsignal zeigt im Bereich des Zentrums der zwischen den Punkten 63 vermuteten Plastikmine eine Signalspitze 65 mit einer Halbwertsbreite, die deutlich geringer ist als die Halbwertsbreite des Bodensignales 62 zwischen den Punkten 63. Das Metallsignal 64 deutet auf das Vorhandensein eines metallischen Teils in der Mitte der vermuteten Plastikmine hin. Das durch die Überlaufkurve 62 angezeigte Fehlen von Bodenmaterial in einer räumlich definierten Umgebung des durch Überlaufkurve 63 angezeigten Metallstückes kann als Hinweis auf das Vorhandensein einer Plastikmine gewertet werden.

Handelt es sich bei dem durch Signalspitze 65 angezeigten Metallstück um einen harmlosen Splitter, der nicht von Kunststoff umgeben ist, so sähe das Bodensignal wie der mittlere Linienscan 61 aus. In einem solchen Fall könnte die Suche ohne weitere Verzögerung fortgesetzt werden. Denn das nicht von einem bodenfreien Hohlraum umgebene Metallstück wird als Falschalarm bezüglich der Minensuche identifizierbar. Das Signal stammt z.B. von einem Kronenkorken.

Da mit Hilfe des beschriebenen Mehrfrequenzverfahrens auch Signale erzeugt werden können, die der Leitfähigkeit aufgefundener Metallstücke proportional sind, kann auch die Leitfähigkeit entsprechend zur Anzeige gebracht werden, beispielsweise durch eine horizontale Leuchtdiodenkette 66. Den Leitfähigkeiten können entsprechende zur Charakterisierung und Identifizierung von Minen verwendbare Angaben über das Material des Metalls (z.B. Austenitisches Eisen, Aluminium etc.) zugeordnet werden. Im Beispiel ist das aufgefundene Metallstück ein Eisenstück. Entsprechend könnte auch die Permeabilität des Materials angezeigt werden. Weitere aus dem Sondensignal herleitbare Signale können dem Volumen des aufgefundenen metallischen Suchobjektes (Leuchtdiodenkette 67) und dessen vertikaler Entfernung zur Suchspule (Leuchtdiodenkette 68) entsprechen. Für die Volumenanzeige wird ausgenutzt, daß die Stärke eines Metallsignales in charakteristischer Weise mit dem durch das Wechselfeld angeregten Volumen steigt. Eine Angabe über die Tiefe eines aufgefundenen Suchobjektes im Boden kann beispielsweise dadurch gewonnen werden, daß die Suchspulenanordnung vorzugsweise periodisch etwa senkrecht zur Bodenoberfläche hin- und herbewegt wird. Dies kann manuell oder automatisch durch entsprechende Hebe- und Absenkeinrichtungen erfolgen. Hierbei kann ausgenutzt werden, daß die Stärke eines durch ein Metallstück erzeugtes Sondensignals etwa mit der sechsten Potenz des Abstandes zwischen Suchspulenanordnung und Metallstück abnimmt. Eine Auswertung von Leitfähigkeitsdaten für mehrere Frequenzen kann zur Ermittlung eines Signales verwendet werden, das die Frequenzabhängigkeit der Leitfähigkeit des Metalles wiedergibt. Auch diese Frequenzabhängigkeit ist eine für ein Metall charakteristische Größe und kann zur Identifizierung des Metalles oder zur Unterscheidung zwischen Metallsignalen und Bodensignalen verwendet werden.

Das Verfahren ist auch geeignet zur Suche nach gänzlich metallfreien Minen. Eine Unterscheidung zu einem harmlosen Metallteil, das z.B. als Blechscheibe ein Signal mit einer relativ großen Halbwertsbreite erzeugen kann, die der Halbwertsbreite eines Plastikminen-Bodensignals etwa entspricht, kann über die Permeabiliät und die Leitfähigkeit des Metallteils vorgenommen werden. Diese Parameter sind mit Hilfe des Mehrfrequenzverfahrens bestimmbar. Bei einer metallfreien Plastikmine ist das Metallsignal gleich Null und Signal 64 im wesentlichen eine Gerade. Diese Eigenschaft kann zum Erkennen metallfreier Plastikminen ausgenutzt werden. Es muß lediglich, beispielsweise durch die kontrasterhöhende Bodenvorbereitung mittels Tränken, sichergestellt werden, daß der Boden eine Mindestleitfähigkeit und/oder eine Mindestpermeabilität aufweist, damit eine Plastikmine ohne Metallanteil nicht übersehen wird. Die Mindestpermeabilität und die Mindestleitfähigkeit des Bodens sind jedoch dank des Mehrfrequenzverfahrens feststellbar und berechenbar und können daher berücksichtigt werden. Die Feststellbarkeit und Meßbarkeit der Leitfähigkeit und der Permeabilität können auch dazu genutzt werden, die entsprechenden pysikalischen Daten des Hohlraumes zu bestimmen. Ein mit elektrisch nicht leitendem und nicht magnetisierbarem Material gefüllter Hohlraum wird, im wesentlichen wie ein materialfreier Hohlraum, eine Permeabilität vom Wert 1 und eine verschwindende Leitfähigkeit haben. Im Gegensatz dazu werden diese Werte bei Bodeninhomogenitäten im allgemeinen nicht erreicht, so daß eine Mindestleitfähigkeit und/oder Mindestpermeabilität verbleibt. Das Mehrfrequenzverfahren ermöglicht somit auch eine Unterscheidung zwischen schlichten Bodeninhomogenitäten und tatsächlich von Kunststoffmaterial gefüllten Hohlräumen.

Insgesamt ist es möglich, eine elektromagnetische Signatur des Suchobjektes zu bestimmen. Über entsprechende Software, die Zuordnungstabellen zu Minentypen enthalten kann, kann der Minentyp ermittelt und ggf. angezeigt werden.

Bedienungsknöpfe 69, die an der Bedien- und Anzeigeeinheit angeordnet sein können, können dazu verwendet werden, entsprechende Verstärkungsfaktoren für die beschriebenen Imaginär- oder Realsignale so einzustellen, daß für die jeweils gewählte Betriebsart das beste Verhältnis von Nutzsignal zu Störsignal eingestellt werden kann. Dies kann mit Hilfe der Anzeigeeinrichtung interaktiv erfolgen. Bei der Verwendung beispielsweise von drei Erregerfrequenzen ist es möglich, gleichzeitig ein Metallsignal mit optimaler Bodenuntekdrückung und ein Signal mit optimaler Bodenerkennung zu erzeugen. Die Signale könnten wie in Fig. 4 gezeigt durch einen Bildschirm oder auch durch jeweils entsprechende Leuchtdiodenbänder gemeinsam angezeigt werden. Die gezeigte Darstellung ermöglicht eine schnelle räumliche Zuordnung von Metall- und Bodensignal und das Erkennen von insbesondere Plastikminen wird erleichtert und beschleunigt. Die Falschalarmrate wird drastisch herabgesetzt, denn bei Metallstücken, die nur Signale der Art 61 und 65 erzeugen, kann die Suche unmittelbar fortgesetzt werden.

**Patentansprüche**

1. Verfahren zur Lokalisierung und Identifizierung von nahe einer Bodenoberfläche oder unter einer Bodenoberfläche im Boden versteckten Suchobjekten, die mindestens ein Teil aus elektrisch leitfähigem, insbesondere metallischem Material und ggf. einen das Teil aufweisenden Körper aus im wesentlichen elektrisch nicht leitfähigem, nicht magnetischen Material, aufweisen, insbesondere Plastikminen, mit folgenden Schritten: Feststellung der Position des Teils; Untersuchung eines das Teil umgebenden Suchbereichs mittels mindestens einer für das Material des Bodens empfindlichen, ein Bodensignal erzeugenden Bodensonde; ortsauflösende Auswertung des Bodensignals.

2. Verfahren nach Anspruch 1, dadurch gekennzeichnet, daß die Feststellung der Position des Teils induktiv mittels mindestens einer Metallsonde erfolgt, die mindestens eine induktive Suchspulenanordnung aufweist.

3. Verfahren nach Anspruch 1 oder 2, dadurch gekennzeichnet, daß die Untersuchung durch vorzugsweise automatische Abrasterung des Suchbereiches durch die Bodensonde erfolgt.

4. Verfahren nach einem der vorhergehenden Ansprüche, dadurch gekennzeichnet, daß die Untersuchung induktiv erfolgt, vorzugsweise mittels einer Bodensonde mit mindestens einer induktiven Suchspulenanordnung.

5. Verfahren nach einem der vorhergehenden Ansprüche, dadurch gekennzeichnet, daß die Untersuchung des Suchbereiches derart erfolgt, daß die Bodensonde relativ zum Suchbereich im wesentlichen parallel zur Bodenoberfläche entlang einer den Bereich des Teils enthaltenden Suchbahn bewegt wird, wobei insbesondere die Bodensonde geradlinig, vorzugsweise abwechselnd in entgegengesetzten Richtungen, bewegt wird.

6. Verfahren nach Anspruch 1, dadurch gekennzeichnet, daß die Untersuchung des Suchbereiches derart erfolgt, daß eine Bodensonde mit einer induktiven Suchspulenanordnung mit mindestens zwei unabhängig ansteuerbaren Sendespulen und mindestens einer Empfängerspule ortsfest zum Suchbereich positioniert wird, daß durch die Sendespulen ein räumlich veränderliches, in den Boden des Suchbereichs eindringendes elektromagnetisches Wechselfeld erzeugt wird und daß die von dem elektrisch leitfähigen und/oder magnetisierbaren Boden bewirkten Veränderungen des Wechselfeldes durch die Empfängerspule in ein mit der räumlichen Veränderung des Wechselfeldes korreliertes Bodensignal umgewandelt werden.

7. Verfahren nach einem der vorhergehenden Ansprüche, dadurch gekennzeichnet, daß die Auswertung des Bodensignals derart erfolgt, daß das Bodensignal durch mindestens eine mit der Bodensonde signalübertragend verbundene Signalauswerteeinrichtung automatisch der durch Lokalisierungsmittel festlegbaren Position der Bodensonde oder der Ausrichtung des räumlich veränderlichen Wechselfeldes zugeordnet wird und zu mindestens einer Abbildung des Suchobjektes umgewandelt wird, wobei insbesondere die Abbildung des Suchobjektes, ggf. nach Speicherung von das Bodensignal repräsentierenden Daten, auf einem temporären und/oder permanenten, vorzugsweise flächigen Aufzeichnungsträger erfolgt, der vorzugsweise eine dem Suchbereich entsprechende Abbildungsfläche aufweist.

8. Verfahren nach einem der vorhergehenden Ansprüche, dadurch gekennzeichnet, daß vor der Untersuchung die elektrische Leitfähigkeit und/oder die Magnetisierbarkeit des Bodens erhöht wird, insbesondere dadurch, daß der Boden im Suchbereich mit einer die elektrische Leitfähigkeit und/oder die Magnetisierbarkeit des Bodens erhöhenden Flüssigkeit getränkt wird.

9. Verfahren nach Anspruch 8, dadurch gekennzeichnet, daß die Flüssigkeit gelöste Mineralstoffe enthält, insbesondere daß die Flüssigkeit Salzwasser ist und/oder daß die Flüssigkeit eine Dispersion von ferromagnetischen und/oder ferrimagnetischen Partikeln in Wasser ist.

10. Verfahren nach einem der Ansprüche 8 oder 9, dadurch gekennzeichnet, daß das Tränken des Bodens durch Besprühen und/oder Begießen des Bodens mit der Flüssigkeit erfolgt.

11. Verfahren nach einem der Ansprüche 8 bis 10, dadurch gekennzeichnet, daß das Tränken des Bodens aus der Luft mit Hilfe eines Flugkörpers erfolgt, vorzugsweise mit Hilfe eines Hubschraubers oder eines Flugzeuges, insbesondere eines Feuerlöschflugzeuges.

12. Verwendung einer induktiven Suchspulenanordnung zur Erzeugung eines zu einer Abbildung einer räumlichen Verteilung von elektrisch leitfähigem und/oder magnetisierbaren Bodenmaterial umwandelbaren Bodensignals bei der Suche nach innerhalb des Bodens versteckten, elektrisch nicht leitfähigen Körpern, insbesondere Körpern von Plastikminen.

13. Verwendung nach Anspruch 12, dadurch gekennzeichnet, daß eine Sendespule der induktiven Suchspulenanordnung mit Wechselstrom mit mindestens zwei, vorzugsweise mindestens drei unterschiedlichen diskreten Frequenzen beaufschlagt wird.

14. Verwendung nach Anspruch 13, dadurch gekennzeichnet, daß mindestens eine der Frequenzen mehr als 60 kHz, insbesondere zwischen 80 und 160 kHz, vorzugsweise ca. 100 kHz beträgt und/oder daß mindestens eine der Frequenzen, vorzugsweise zwei der Frequenzen vom Typ einer Niedrigfrequenz f0 sind, wobei f0 kleiner als 1 kHz ist, vorzugsweise zwischen 50 und 500 Hz liegt und insbesondere bei etwa 100 Hz liegt.

15. Detektionsvorrichtung zur Lokalisierung und Identifizierung von nahe einer Bodenoberfläche oder unter einer Bodenoberfläche (3) im Boden (4) versteckten Suchobjekten (2), die mindestens ein Teil (6) aus einem elektrisch leitfähigen, insbesondere metallischen Material und ggf. einen das Teil aufweisenden Körper (5) aus einem im wesentlichen elektrisch nicht leitfähigen, nicht magnetischen Material aufweisen, insbesondere Plastikminen, mit mindestens einem Sondenträger (8), der mindestens eine für elektrisch leitfähiges Material empfindliche Metallsonde (30) und mindestens eine zur Untersuchung eines das Teil umgebenden Suchbereiches ausgebildete, ein Bodensignal erzeugenden Bodensonde (30) aufweist, sowie mit einer mit der Bodensonde signalübertragend verbundenen Signalauswerteeinrichtung zur ortsauflösenden Auswertung des Bodensignals.

16. Detektionsvorrichtung nach Anspruch 15, dadurch gekennzeichnet, daß die Bodensonde zur Abrasterung des Suchbereiches ausgebildet ist.

17. Detektionsvorrichtung nach Anspruch 15 oder 16, dadurch gekennzeichnet, daß die Metallsonde mindestens eine induktive Suchspulenanordnung mit mindestens einer Sendespule und mindestens einer Empfängerspule aufweist.

18. Detektionsvorrichtung nach einem der Ansprüche 15 bis 17, dadurch gekennzeichnet, daß die Bodensonde (30) mindestens eine induktive Suchspulenanordnung mit mindestens einer Sendespule und mindestens einer Empfängerspule aufweist.

19. Detektionsvorrichtung nach Anspruch 17 und 18, dadurch gekennzeichnet, daß die induktive Suchspulenanordnung der Metallsonde (30) und die induktive Suchspulenanordnung der Bodensonde (30) durch dieselbe induktive Suchspulenanordnung gebildet sind.

20. Detektionsvorrichtung nach einem der Ansprüche 17 bis 19, dadurch gekennzeichnet, daß die Sendespule der Suchspulenanordnung an eine Erregerstromquelle angeschlossen ist, die zur Erzeugung von Wechselstrom einer diskreten ersten Frequenz und mindestens einer von der ersten Frequenz verschiedenen diskreten zweiten Frequenz ausgebildet ist, wobei vorzugsweise mindestens drei voneinander verschiedene Frequenzen erzeugt werden.

21. Detektionsvorrichtung nach nach einem der Ansprüche 15 bis 20, dadurch gekennzeichnet, daß der Sondenträger (8) Sondenführungsmittel (34, 35) aufweist, die zur Führung der Bodensonde relativ zum Sondenträger entlang einer im wesentlichen parallel zur Bodenoberfläche (3) ausrichtbaren Suchbahn ausgebildet sind, wobei insbesondere die Sondenführungsmittel mindestens eine Linearführung (34, 35) für die Bodensonde und/oder mindestens ein um einen Drehwinkel von vorzugsweise 360° drehbares Drehelement, insbesondere eine Rotierscheibe, aufweisen, an dem die Bodensonde, vorzugsweise radial beweglich, angeordnet ist.

22. Detektionsvorrichtung nach einem der Ansprüche 15 bis 21, dadurch gekennzeichnet, daß der Sondenträger (8) durch eine Person tragbar ist und vorzugsweise Tragehilfsmittel aufweist, die insbesondere eine Tragestange (7) umfassen, die an dem Sondenträger (8) befestigt ist.

23. Detektionsvorrichtung nach einem der Ansprüche 15 bis 22, dadurch gekennzeichnet, daß der Sondenträger (8) am unteren Ende einer Tragestange (7) vorzugsweise lösbar befestigt ist.

24. Detektionsvorrichtung nach einem der Ansprüche 15 bis 23, dadurch gekennzeichnet, daß der Sondenträger (8) ein im wesentlichen geschlossenes Gehäuse (23) mit einem vorzugsweise ebenen Gehäuseboden (27) umfaßt, wobei mindestens eine Suchspulenanordnung innerhalb des Gehäuses (23) angeordnet ist.

25. Detektionsvorrichtung nach einem der Ansprüche 15 bis 24, dadurch gekennzeichnet, daß der Sondenträger (8) nach unten hinausragende Abstützmittel (24) zur ortsfesten Anbringung des Sondenträgers und der Sonden in einem Abstand oberhalb der Bodenoberfläche aufweist, wobei die Abstützmittel vorzugsweise im Randbereich des Gehäuses angeordnet und vorzugsweise in Form von Wülsten, Stegen oder Füßen ausgebildet sind.

26. Detektionsvorrichtung nach einem der Ansprüche 21 bis 25, dadurch gekennzeichnet, daß die Sondenführungsmittel mindestens einen durch eine Welle (48, 52, 52', 53, 55) antreibbaren, parallel zu der Linearführung (34, 35) umlaufenden Riemen (40) mit einem seitlich abragenden Bolzen (39) umfassen, der in eine quer, vorzugsweise senkrecht zur Linearführung (34, 35) verlaufenden Nut (38) an einem Träger (31) der Suchspulenanordnung eingreift, wobei vorzugsweise der Riemen und/oder der Bolzen und/oder die Welle im wesentlichen aus unmagnetischem, elektrisch nicht leitendem Material bestehen, insbesondere aus Kunststoff.

27. Detektionsvorrichtung nach 26, dadurch gekennzeichnet, daß entfernt von dem Sondenträger (8), insbesondere am oberen Ende der Tragestange (7), Antriebsmittel für die Welle vorgesehen sind, insbesondere ein Elektromotor (21).

28. Detektionsvorrichtung nach einem der Ansprüche 22 bis 27, dadurch gekennzeichnet, daß die Tragestange (7) innen hohl ist und daß vorzugsweise die Welle innerhalb der Tragestange von dem Antriebsmittel (12) zu dem Sondenträger (8) verläuft.

Fig. 1

Fig. 2

Fig. 3

Fig. 4